# EUROPÄISCHE PATENTSCHRIFT

(11) **EP 3 936 968 B1**
(45) Veröffentlichungstag und Bekanntmachung des Hinweises auf die Patenterteilung: **30.07.2025**
(21) Anmeldenummer: 21181643.4
(22) Anmeldetag: 25.06.2021
(51) Int. Cl.: G05G 1/10, B62D 1/02, B60N 2/75

(54) **LENKVORRICHTUNG FÜR FAHRZEUGE**
STEERING DEVICE FOR VEHICLES
DISPOSITIF DE DIRECTION POUR VÉHICULES

(30) Priorität: 06.07.2020 DE 102020117691
(43) Veröffentlichungstag der Anmeldung: 12.01.2022
(73) Patentinhaber: GRAMMER AG, 92289 Ursensollen (DE)
(72) Erfinder: Haller, Erwin, 92262 Birgland (DE); Kolb, Jens, 92281 Königstein (DE)
(74) Vertreter: Hannke Bittner & Partner mbB Regensburg

(56) Entgegenhaltungen:
- EP-A1- 1 959 329
- WO-A1-2015/136901
- DE-A1- 19 951 379
- DE-A1- 19 956 870
- FR-A3- 2 889 125
- SE-C2- 512 361

## Beschreibung

Die Erfindung betrifft eine Lenkvorrichtung für Fahrzeuge, insbesondere Gabelstapler, zur Durchführung einer Lenkbewegung des fahrbaren Fahrzeuges auf einem Untergrund durch eine Handbewegung eines Fahrzeugführers, gemäß dem Obergriff des Patentanspruches 1.

Es gibt eine Vielzahl verschiedenster Lenkvorrichtungen, auch für Gabelstapler. Üblicherweise werden bisher normale Lenkräder verwendet, die vor dem Fahrzeugsitz angeordnet sind und dem Fahrzeugführer aufgrund ihrer Position die Freisicht zu der zu befördernden Ware auf den Gabeln des Gabelstaplers nimmt. Hierbei spielt auch eine wesentliche Rolle, dass häufig zusätzlich zu dem Lenkrad noch das Armaturenbrett im vorderen Bereich angeordnet ist. Wäre beides nicht vorhanden, so könnte der Gabelstaplerfahrer ohne Probleme die niedriger angeordnete Ware bzw. die auf den Gabeln positionierte Fracht betrachten und somit ein sichereres Fahren und Befördern der Fracht samt der Palette sicherstellen. Dies ist häufig bisher mit dem Umstand verbunden, dass der Fahrer aus dem Fahrzeugsitz sich erheben muss bzw. sich nach vorne beugen muss, um ein sauberes Aufnehmen der Palette oder eines anderen Gegenstandes mit den Gabeln sicherzustellen.

Weiterhin ist es gewünscht, dass bestimmte Fahrzeuge einen um 360 Grad drehbaren Sitz aufweisen, um beispielsweise auch rückwärts mit optimaler Sicht auf den Fahrweg ohne ein Verdrehen des Oberkörpers des Fahrzeugführers zu ermöglichen. Dies hat nicht nur einen höheren Komfort für den Fahrzeugführer, sondern auch eine verbesserte Ergonomie für diejenige Person zufolge. Allerdings ist dies nicht ohne Weiteres möglich, da bisherige Lenkvorrichtungen, wie beispielweise das erwähnte Lenkrad, im vorderen Armaturenbereich des Fahrzeuges, wie beispielsweise einem Gabelstapler, angeordnet ist und somit bei einem um 180 Grad verschwenkten Fahrzeugsitz das Lenkrad für den Fahrzeugführer nicht mehr erreichbar ist. Somit ist auch das Fahrzeug nicht mehr bedienbar bzw. lenkbar.

Aus der DE 199 51 379 A1, SE 512 361 C2 und EP 1959 329 A1 sind gattungsgemäße Lenkvorrichtungen für Fahrzeuge bekannt.

Somit ist es Aufgabe der Erfindung, eine Lenkvorrichtung für Fahrzeuge zur Verfügung zu stellen, die sowohl eine freie Sicht des Fahrzeugführers auf den Bereich vor dem Fahrzeug, insbesondere im Bodenbereich des Fahrzeuges, als auch eine komfortable Bedienung einer Lenkvorrichtung des Fahrzeuges unabhängig von einer momentanen Drehstellung des Fahrzeugsitzes sicherstellt.

Diese Aufgabe wird gemäß den Merkmalen des Anspruches 1 gelöst.

Kerngedanke der Erfindung ist es, dass die Lenkvorrichtung für Fahrzeuge, insbesondere Gabelstapler, zur Durchführung einer Lenkbewegung des fahrbaren Fahrzeuges auf einem Untergrund durch eine Handbedienung eines Fahrzeugführers an oder in einer Armlehne eines Fahrzeugsitzes angebracht ist und dass die Lenkvorrichtung mindestens ein drehbares Rad aufweist, welches umfangseitig von Fingern einer auf der Lenkvorrichtung abgelegten Hand des Fahrzeugführers zumindest teilweise umfassbar ist und für eine Lenkbewegung um eine Drehachse gedreht werden kann wobei ein armartiges Bauteil mit einem vorderen Bereich und einem hinteren Bereich vorgesehen ist, wobei der hintere Bereich unterhalb der Armlehne befestigt ist, und wobei oberhalb des Radelementes ein gegenüber der Armlehne und gegenüber der Lenkvorrichtung stationär angeordnetes knaufartiges Kopfteil zur Ablage einer Innenhandfläche der Hand und unterhalb des Radelements ein Basiselement angeordnet sind, wobei das Radelement, das Basiselement und das Kopfteil oberhalb eines vorderen Anteils des armartigen Auslegers fest angeordnet sind. Somit kann zum einen die Lenkvorrichtung aufgrund ihrer Anordnung an der Armlehne zusammen mit dem Fahrzeugsitz gedreht werden und damit auch eine Lenkung des Fahrzeuges und gegebenenfalls eine Betätigung weiterer Funktionen des Fahrzeuges ermöglichen, wenn der Fahrzeugsitz sich momentan in einer anderen Drehstellung befindet. Dies trifft auch auf eine 180-Grad-Drehstellung des Fahrzeugsitzes zu.

Vorzugsweise ist die Lenkvorrichtung hierbei an der linken Armlehne angeordnet, da häufig an der rechten Armlehne ein Joystick vorgesehen ist, der verschiedene weitere Funktionen, wie beispielweise das Bedienen der Gabeln eines Gabelstaplers als Aufgabe hat.

Zudem ist die Lenkvorrichtung derart vorteilhaft ausgebildet, dass sie von oben in ihrer knaufartigen Ausbildung mit einer Innenhandfläche einer Hand bedeckt werden kann und die nach unten weisenden Finger das Radelement umfassen, sodass ein feinfühliges nach links und rechts Drehen des Rades zu einer Lenkbewegung des Fahrzeuges führt. Hierfür sind die Finger mit oder ohne Daumen einer linken Hand an dem Außenumfang des Radelementes angeordnet und können durch Ablage der Innenhandfläche der Hand freibeweglich das Radelement drehen. Allerdings ist hierbei zu beachten, dass die Innenhandfläche der Hand auf einem stationären Kopfteil angeordnet ist, welches sich nicht mit dem Radelement mitbewegt.

Eine derartige Ausbildung einer Lenkvorrichtung mit einem knaufartigen Kopfteil lässt sich vorzugsweise um einen Drehwinkel von 30° bis 40° nach links und nach rechts drehen, wodurch der gesamte Lenkvorgang mit den üblichen Kurvenradien eines Fahrzeuges eingeleitet werden kann. Dem gegenüber hat ein herkömmliches normales Lenkrad, welches im vorderen Bereich eines Fahrzeuges angeordnet ist, einen Drehwinkel von +/- 720°.

Diese geringen Drehwinkel sind aufgrund des feinfühlig bedienbaren Rades in seinem Außenumfang mithilfe der daran angelegten Finger möglich.

Das Radelement, welches auch als Lenkscheibe bezeichnet werden kann, passt sich nämlich bei einer entsprechenden Ausbildung zusammen mit dem knaufartigen Kopfteil und einem darunter angeordneten Basisteil ergonomisch angenehm einer gewölbten Innenhand an und ermöglicht hierdurch ein entspanntes Verdrehen des Radelementes und damit einen sensiblen Lenkvorgang durch geringes Bewegen der Finger dieser Hand.

Somit wird nicht nur der Komfort des Fahrers hinsichtlich des Erreichens des Lenkrades, welches bisher im vorderen Bereich am Armaturenbrett angeordnet war, sondern auch hinsichtlich eines entspannten Lenkens durch geringe Bewegungen der Hand bzw. der Finger des Fahrzeugführers erhöht.

Das um die Drehachse drehbare Radelement ist vorzugsweise horizontal ausgerichtet, welches bedeutet, dass die Drehachse vorzugsweise vertikal ausgerichtet ist. Jedoch kann diese Achse gemäß weiterer Ausführungsformen auch in jede Richtung, also nach vorne und zur Seite hin geschwenkt werden, um gegebenenfalls ein komfortableres Bedienen in Abhängigkeit von der Handstellung der Personen zu deren Arm zu ermöglichen.

Oberhalb des Randelementes ist erfindungsgemäß das bereits erwähnte knaufartige Kopfteil, welches stationär an der Lenkvorrichtung angeordnet ist und zur Ablage der Innenhandfläche der Hand dient. Dieses Kopfteil ist ergonomisch vorteilhaft ausgebildet, sodass es sich in eine Innenhandfläche der Hand gut einpasst. Es kann vorzugsweise auch höhenverstellbar sein, um die nach unten ragenden Finger derart zum Radelement zu beabstanden, dass nur die Endbereiche der Finger das Radelement umfassen. Dies hat den Vorteil, dass eine noch sensiblere Bedienung des Radelementes mit den vorderen Bereichen der Finger ermöglicht wird. Somit ist ein feinfühligerer Lenkvorgang, insbesondere in Lagerbereichen, in welchen sich Gabelstapler sehr häufig befinden, möglich.

Das Kopfteil kann insgesamt oder auch nur in Teilen höhenverstellbar sein, sodass zum Beispiel ein oberer Deckel des Kopfteils nach oben gefahren werden kann, woraus sich unter anderem eine aktive Belüftung um den gesamten oberen Funktionsblock bzw. eine Haube ergeben kann. Denn zwischen Deckel und restlichem Kopfteil würde ein Spalt entstehen, der von innen heraus auch eine Belüftung gegenüber der Hand durch inneres Zuführen von Luft ermöglichen würde. Diese Luft würde über den gesamten Umfang des Kopfteils hinweg nach unten über das Radelement und das darunter liegende Basisteil strömen und somit auch ein Abrutschen eventuell feuchter Finger an dem Radelement verhindern.

Die Vorrichtung an sich, die vorzugsweise im vorderen Bereich der Armlehne angeordnet ist, vor einer vorzugsweise baulich üblichen Armlehne, kann zu der restlichen Armlehne hin auch vorteilhaft in ihrem Abstand variiert werden. Dies hat zur Folge, dass ein Benutzer seinen Arm in der üblichen Weise auf der Armlehne ablegen kann und dies das knopfartige Kopfteil zusammen mit der restlichen Lenkvorrichtung derart zur Armlehne beabstandet, dass die Lenkvorrichtung mit dem richtigen Abstand zu dem restlichen Unterarm optimal in der Innenhandfläche liegt.

Unterhalb des Radelements ist das bereits erwähnte gegenüber der Armlehne stationär angeordnete Basisteil, welches mit zumindest teilweise integrierten ersten Funktionstasten und -anzeigen ausgestattet ist. Derartige Funktionstasten und -anzeigen können auch im knaufartigen Kopfteil als zweite Funktionstasten und -anzeigen vorhanden sein. Hier beispielweise weitere Fahrzeugfunktionen, wie Lichtfunktion, Blinkfunktion, Parkfunktion, Hupfunktion und dergleichen. Verschiedene weitere Sensoren und Aktoren in passiver oder aktiver Form könnten ebenso durch entsprechend angeordnete Schalter an dem Kopfteil- oder dem Basisteil bedient werden oder auch nur in ihrer Funktion durch Kontrollleuchten angezeigt werden. Ebenso ist ein Wechsel von einem Vorwärts- auf ein Rückwärtsfahren mittels einer kleinen Fingerbewegung aufgrund derartiger Betätigungselemente an der Lenkvorrichtung denkbar. Eben weiterhin kann ein Wechsel von einem schnellen auf einem langsames Fahren denkbar sein. Auch der Batteriezustand könnte ebenso wie die aktive Zündung angezeigt werden. Zusammengefasst ist somit festzustellen, dass eine Vielzahl an Funktionstasten und Funktionsanzeigen in einer derartigen innovativen Lenkvorrichtung angeordnet werden können, wobei all diese weiteren Funktionen als Merkmale eines Armaturenbrettes wegfallen würden, sodass sich ein Armaturenbrett, ebenso wie ein Lenkrad erübrigen würde. Auch dies stellt somit eine freie Sicht zu den Gabeln eines Gabelstaplers und allgemein zu dem Bodenbereich vor einem Fahrzeug zur Verführung.

Vorteilhaft ist aufgrund der Anordnung dieser Lenkvorrichtung an der Armlehne eines Fahrzeugsitzes auch eine reduzierte Belastung von Nacken- und Schultermuskulatur durch geringeren bzw. angepassten Lenkwinkelbereich. Auch die Position der Lenkeinrichtung bleibt bei Veränderung der Position des Sitzsystems konstant zu diesem, wodurch ein höherer Komfort für den Bediener ermöglicht wird. Ein erleichtertes Aussteigen aus dem Fahrzeug ist aufgrund des Fehlens eines konventionellen Lenkrades ebenso möglich. Insgesamt ist somit eine ergonomische Verbesserung der Körperhaltung im Sitzsystem möglich.

Das Radelement ist vorteilhaft umfangsseitig mit Fingerrillen ausgestattet, sodass ein Abrutschen der Fingerspitzen bzw. der Endbereiche der Finger, die von oben herabkommend das Rad umgreifen, nicht möglich ist. Ebenso ist ein feinfühligeres Drehen des Rades möglich.

Das Rad bzw. das Radelement bzw. die Lenkscheibe kann eine Drehbewegung um einen Drehwinkel von vorzugsweise bis 40 Grad nach links und rechts durchführen, wobei theoretisch auch 180 Grad möglich sind. Eine entsprechende Begrenzung lässt sich auf unter 40 Grad erreichen, wenn man beispielweise abhängig von der momentanen Geschwindigkeit des Fahrzeuges einen kleineren Drehwinkel und somit eine kleinere Lenkbewegung zulassen möchte, um ein Umkippen des Fahrzeuges aufgrund einer zu starken Lenkbewegung zu verhindern. Dies kann mittels entsprechender elektronischer Steuerung ermöglicht werden.

Ein bereits verdrehtes Radelement kann mittels einer entsprechenden Ringfeder oder dergleichen mit einer Rückstellkraft beaufschlagt werden, sodass das Drehrad beim Loslassen bzw. Abheben der Finger von dem Drehrad wieder von allein in eine Nullposition gedreht wird. Dies ist auch bei konservativen Lenkrädern bekannt.

Außerdem kann ein derartiges Drehrad bzw. Radelement auch mit einer Dämpfungskraft beaufschlagt werden. Dies kann mittels Honigmotoren oder dergleichen erreicht werden, sodass eine nicht zu abrupte und starke Lenkbewegung innerhalb einer kurzen Zeit möglich ist.

Das Kopfteil, das Basisteil und das Radelement sind vorzugsweise zumindest teilweise kreisförmig ausgebildet, um so eine ergonomisch komfortable Form für eine Innenseite einer Hand zu ermöglichen.

Die Lenkvorrichtung ist in Fahrzeugrichtung mit Fahrzeugsitzrichtung betrachtet vor der Armlehne angeordnet und gegenüber einer Längsachse der Armlehne bezüglich einer Sitzfläche des Fahrzeugsitzes um einen Winkel nach außen schwenkbar. Dies entspricht einer ergonomisch entspannten vorteilhaften Haltung der Hand gegenüber dem restlichen Unterarm.

Das Kopf- und Basisteil kann rückseitig zur Armlehne hin für eine bessere Auflage der Handfläche verlängert ausgebildet sein. Dies bedeutet, dass im hinteren Bereich des Kopf- und Basisteiles diese beiden Teile nicht mehr kreisförmig, beziehungsweise rund ausgebildet sind, sondern eine wulstartige Verlängerung haben, die sich besonders angenehm für die abgelegte Innenhand eines Benutzers aufgrund der Ergonomie einer Innenhandfläche auswirkt.

Weitere vorteilhafte Ausführungsformen ergeben sich aus den Unteransprüchen und den nachfolgenden Zeichnung. Hierbei zeigen:
- Fig. 1: in einer perspektivischen Darstellung einen Fahrzeugsitz mit einer erfindungsgemäßen Lenkvorrichtung;
- Fig. 2: in einer seitlichen Darstellung eine Armlehne mit einer erfindungsgemäßen Lenkvorrichtung;
- Fig. 3: in einer Draufsicht die Armlehne mit der erfindungsgemäßen Lenkvorrichtung;
- Fig. 4: in einer seitlichen Darstellung die erfindungsgemäße Lenkvorrichtung;
- Fig. 5a: in einer Vorderansicht die erfindungsgemäße Lenkvorrichtung;
- Fig. 5b: in einer Rückansicht die erfindungsgemäße Lenkvorrichtung;
- Fig. 6a: in einer Draufsicht die erfindungsgemäße Lenkvorrichtung;
- Fig. 6b: in einer seitlichen Schnittdarstellung gemäß dem Schnitt E -·-·- E aus Fig. 6a die erfindungsgemäße Lenkvorrichtung;
- Fig. 6c: in einer Ausschnittsdarstellung gemäß dem Ausschnitt F aus Fig. 6b einen Ausschnitt der erfindungsgemäßen Lenkvorrichtung;
- Fig. 7: in einer Explosionsdarstellung die einzelnen Bauteile der erfindungsgemäßen Lenkvorrichtung.

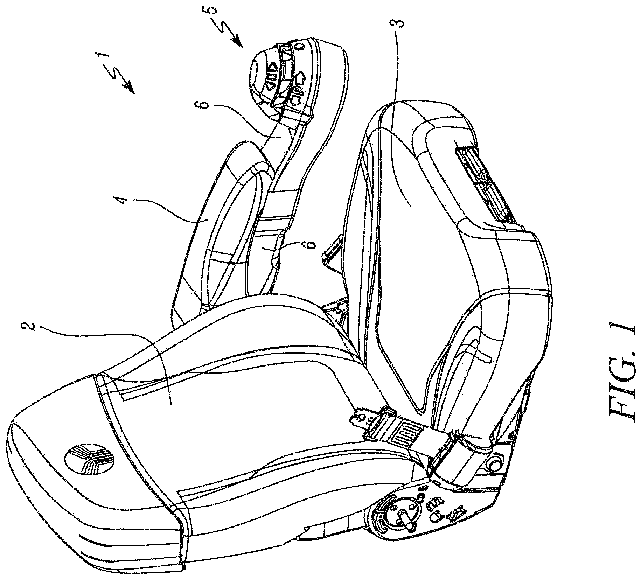

In Fig. 1 sieht man in der perspektivischen Darstellung einen Fahrzeugsitz mit der erfindungsgemäßem Lenkvorrichtung dargestellt. Der Fahrzeugsitz 1 weist eine Rückenlehne 2 und ein Sitzteil 3 auf. Eine Armlehne 4 ist auf der linken Seite angeordnet und hat in ihrem vorderen Bereich eine daran befestigte erfindungsgemäße Lenkvorrichtung 5.

Die Lenkvorrichtung 5 ist mit einem armartigen Ausleger 6 vor und unterhalb der Armlehne 4 an dieser befestigt.

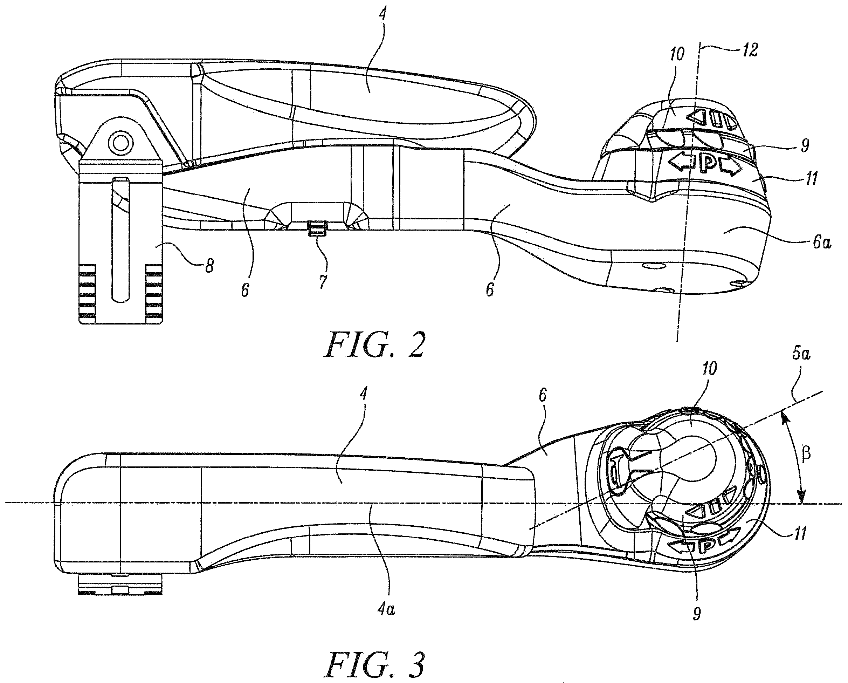

In Fig. 2 wird in einer seitlichen Darstellung die erfindungsgemäße Lenkvorrichtung zusammen mit einer Armlehne wiedergegeben. Dieser Darstellung ist deutlich zu entnehmen, dass erfindungsgemäß ein armartiger Ausleger 6 mit einem vorderen Bereich 6a in seinem hinteren Bereich unterhalb der Armlehne 4 befestigt ist. Ein Einstellungsrad 7 und ein Befestigungselement 8 dienen dazu, die Armlehne zusammen mit der erfindungsgemäßen Lenkvorrichtung 5 in ihrer Höhe gegenüber dem Fahrzeugsitzteil zu verschieben bzw. zu verändern. Die Lenkvorrichtung 5 weist ein Radelement 9 auf, welches um eine Drehachse 12 drehbar ist. Erfindungsgemäß ist oberhalb des Radelementes 9, was auch als Lenkscheibe betrachtet werden kann, gegenüber der restlichen Lenkvorrichtung ein stationär angeordnetes knaufartiges Kopfteil 10 angeordnet. Dieses kann nicht um die Drehachse 12 gedreht werden.

Ebenso kann nicht das erfindungsgemäß darunter angeordnete Basisteil 11 gegenüber einer Drehachse 12 gedreht werden. Lediglich das Radelement 9 ist drehbar ausgebildet. Dies wird später noch näher beschrieben.

Sämtliche drei Teile 9, 10 und 11 sind erfindungsgemäß oberhalb eines vorderen Anteiles 6a des armartigen Auslegers 6 an diesem fest angeordnet.

In Fig. 3 sind in einer Draufsicht die Armlehne und die erfindungsgemäße Lenkvorrichtung gemäß Fig. 2 dargestellt. Aus dieser Darstellung kann wiederum entnommen werden, dass die Lenkvorrichtung vor der Armlehne 4 angeordnet ist. Hierbei ist zu beachten, dass vorzugsweise gegenüber einer Längsachse 4a der Armlehne, die Lenkvorrichtung 5 leicht angewinkelt nach außen geschwenkt ist. Dies geht aus einem Vergleich der Längsachse 4a der Armlehne und einer Längsachse 5a der Lenkvorrichtung hervor. Ein Winkel β zwischen den beiden Achsen gibt diese Schwenk- bzw. Drehstellung wieder. Vorteilhaft kann diese Drehstellung bewirken, dass der Bediener noch komfortabler die Lenkvorrichtung, bei abgelegtem Unterarm auf der Armlehne, bedienen kann.

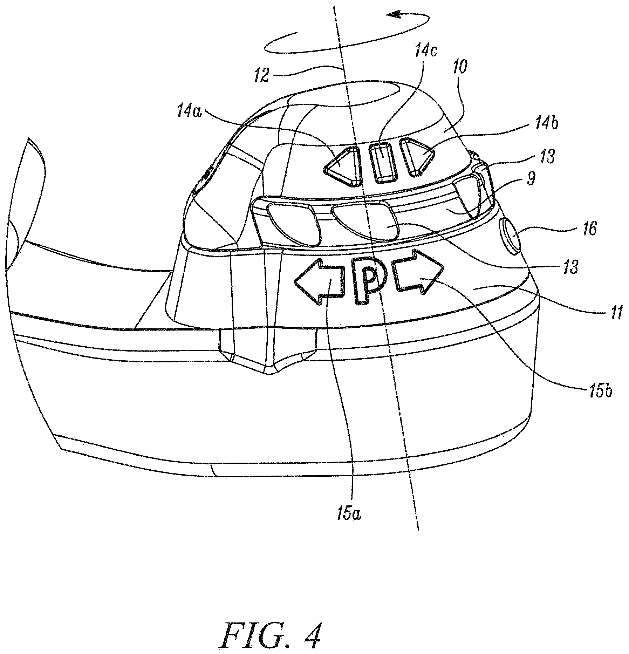

In Fig. 4 ist in einer seitlichen Darstellung die erfindungsgemäße Lenkvorrichtung ohne weitere Armlehne dargestellt. Dieser Darstellung ist zu entnehmen, dass die Lenkvorrichtung nicht nur das um die Achse 12 drehbare Radelement 9 mit daran angeordneten Fingereinkerbungen 13 umfasst, in denen die Finger komfortabel in ihre mit ihrem Endbereichen können, um das Radelement 9 zu drehen. Vielmehr ist auch das darunter angeordnete stationäre Basisteil 11 mit zusätzlichen Bedienschaltern 15a, 15b sowie Kontrollleuchten 16 zu sehen. Die Bedienschalter 15a und 15b können beispielweise mit dem Daumen der linken Hand bedient werden, um eine Parkstellung einzunehmen bzw. eine Parkbremse zu aktivieren oder zu deaktivieren. Hierfür ist es nicht notwendig, dass die restlichen Finger der linken Hand von dem Radelement 9 weggenommen werden.

Das Kopfteil 10 hat ebenso eine zweite Funktionsanzeige und Funktionsbetätigungselemente. Beispielsweise kann ein Blinker des Fahrzeuges durch Betätigungselemente 14a und 14b betätigt werden. Diese Betätigungselemente können aber auch dazu dienen, um das Fahrzeug vorwärts und rückwärts zu bewegen. Eine Neutralstellung wäre dann mit den Betätigungselement 14c durch dessen Betätigung möglich.

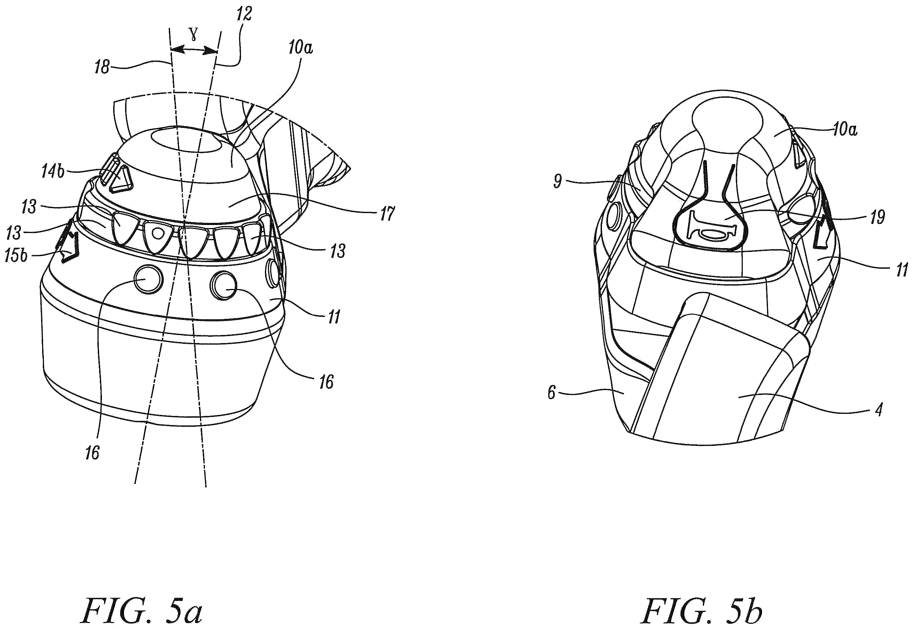

In Fig. 5a ist die Lenkvorrichtung in einer Vorderansicht wiedergegeben. Dieser Darstellung ist deutlich zu entnehmen, dass gemäß dem Winkel γ zwischen einer Drehachse 12 der Lenkvorrichtung und einer vertikalen Achse 18 eine Verschwenkung der Lenkvorrichtung besteht, um so noch ergonomischer die Bedienung der Lenkvorrichtung mittels einer Hand einer Person zu ermöglichen. Denn es hat sich gezeigt, dass bei einer leichten Nachinnenwendung der Hand zu dem Fahrzeugsitz hin, ein entspannteres Bedienen der Lenkvorrichtung mit dem zu drehenden Radelement möglich ist.

Dieser Darstellung gemäß Fig. 5a ist ebenso ein angedeuteter Finger 17 zu entnehmen, wobei vorzugsweise 4 oder sogar 5 Finger auf dem Radelement gleichzeitig abgelegt werden, um das Radelement entsprechend feinfühlig zu bedienen.

Ein oberseitiger Deckelbereich 10a bzw. Deckel 10a des Kopfteiles 10 kann dazu dienen, dass dieser separat nach oben und unten verschoben werden kann, um so einen optimalen Abstand der nach unten ragenden Fingern 17 zu der auf dem Kopfteil 10 abgelegten Innenhandfläche derart einzustellen, dass nur die Endbereiche der Finger 17 an dem Radelement aufliegen. Selbstverständlich hängt dies von der Fingerlänge einer individuellen Person ab.

Weitere Kontrollleuchten 16 sind an dem Basisteil 11 zu sehen.

In Fig. 5b ist die gleiche Lenkvorrichtung von der Rückseite dargestellt. Dieser für einen Bediener der Lenkvorrichtung leicht zu betrachtende Rückseite der Lenkvorrichtung ist zu entnehmen, dass ein Hupbetätigungselement 19 in dem Kopfteil und seiner Verlängerung 11 als Wippbauteil eingearbeitet ist. Dieses Hupbetätigungselement 19 kann somit mit dem Handballen der aufliegenden Hand oder einem benachbarten Bereich einfach und unkompliziert betätigt werden, ohne die restliche Hand von der Lenkvorrichtung entnehmen zu müssen.

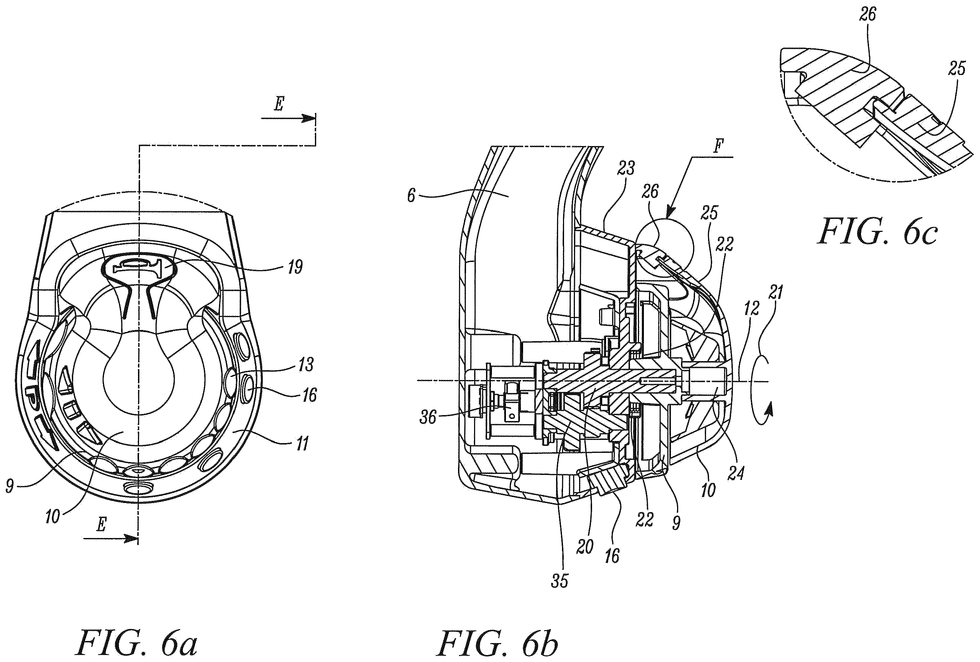

In Fig. 6a ist die erfindungsgemäße Lenkvorrichtung in einer Draufsicht dargestellt. Dieser Darstellung ist nochmal das Hupbetätigungselement 19 sowie die Fingereinkerbungen 13 in dem Radelement 9 und verschiedene Kontrollleuchten in dem Basiselement 11 zu entnehmen. Gemäß einem Schnitt E -·-·- E ist gemäß dieser Figur 6a in Fig. 6b eine Querschnittsdarstellung wiedergegeben. In dieser Darstellung wird der komplexe Innenaufbau einer derartigen innovativen Lenkvorrichtung dargestellt. Es kann gesehen werden, dass gemäß einer Drehbewegung 21 um die Drehachse 12 das Radelement 9 gedreht werden kann. Hierfür ist das Radelement um ein zentral angeordnetes Drehteil 20 angeordnet, welches wiederum mittels beispielweise Zahnradübertragung ein weiteres Drehteil 35 antreibt und dieses wiederum weitere drehende Teile 36 antreibt. Hierdurch kann eine Weitergabe der Drehstellung bzw. Lenkposition aufgrund elektronischer Abtastung erreicht werden. Eine federnde Lagerung 20 des Radelementes 9 ist vorhanden.

Das Bauteil 20 ist oberseitig mittels einem im Kopfteil 10 angeordneten Lagerelementes 24 ebenso wie das Radelement 9 drehbar gelagert.

Ein Hupbetätigungselement 19 ist als Teil 25 der Kopfteilhaube flanschartig in ein entsprechendes Gegenstück 26 der Kopfteilhaube angreifend ausgebildet, sodass dieses Hupbetätigungselement nur bei stärkerer Druckbelastung nach innen gedrückt werden kann und dadurch ein dahinter angeordnetes Federelement zusammendrückt und ein Hupsignal auslöst. Dies ist nochmal als Ausschnitt F in Fig.6c dargestellt.

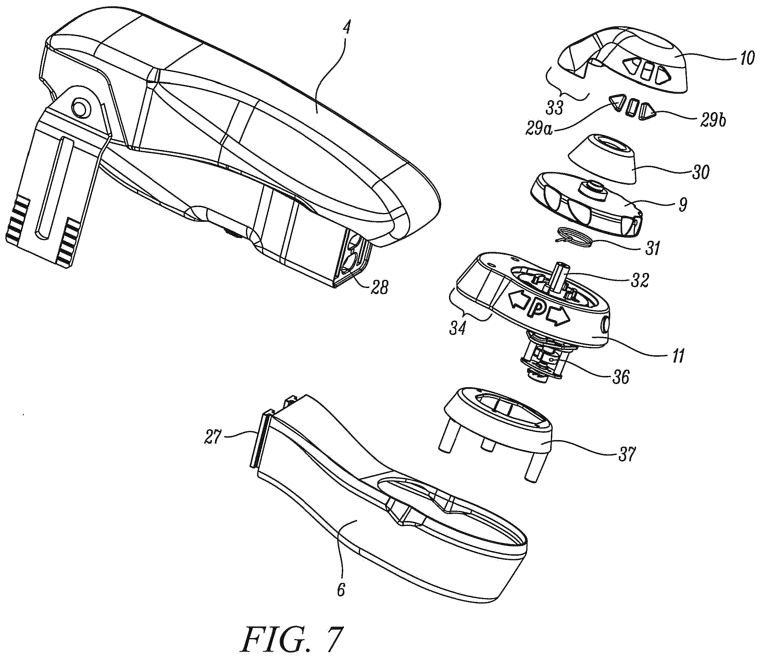

In Fig. 7 sind nochmal in einer explosionsartigen Darstellung die Bauteile der Lenkvorrichtung wiedergegeben. An einer Armlehne 4 ist vorderseitig mit beispielweise zwei schienenartigen Elementen 27 der Haltearm bzw. der armartiger Ausleger 6 der Lenkvorrichtung von unten nach oben verschiebbar angeordnet. Die entsprechend komplementiert ausgebildeten Gegenstücke sind mit Bezugszeichen 28 an der Vorderseite der Armlehne dargestellt.

Das Kopfteil 10 weist ebenso wie das Basisteil 11 rückseitig, also zur Armlehne hin, eine Art Verlängerung in seinem Aufbau auf. Diese Verlängerung 33, 34 dient zur besseren Ablage des Handballens und der gesamten Innenfläche der Hand.

Drückbare bzw. betätigbare Betätigungselemente 29a, 29b sind innerhalb entsprechender komplementiert ausgebildeter Ausnehmungen des Kopfteiles 10 angeordnet.

Zwischen den Radelement 9 und dem Kopfteil 10 ist zur entsprechenden Lagerung ein konusartiges Bauteil 30 vorhanden.

Das Radelement 9 kann mittels einer Ringfeder 31 kraftbeaufschlagt werden, sodass es sich beispielweise wieder von allein zurückstellt. Hierfür ist die Feder 31 auf einer Achse 32 angeordnet, welche mit entsprechenden Sensoren und drehenden Bauteilen 36 innerhalb des Basisteiles verbunden ist.

Das Basisteil 11 ist über ein Zwischenstück 37, welches unterseitig mehrere Füße aufweist, in den armartigen Ausleger 6 zur festen Verankerung eingesteckt.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Rückenlehne
- 3: Sitzteil
- 4: Armlehne
- 4a: Längsachse
- 5: Lenkvorrichtung
- 5a: Längsachse
- 6: armartiger Ausleger
- 6a: vorderer Anteil, vorderen Bereich
- 7: Einstellungsrad
- 8: Befestigungselement
- 9: Radelement
- 10: knaufartiges Kopfteil, Kopfteil
- 10a: oberseitiger Deckelbereich, Deckel des Kopfteiles
- 11: Basisteil, stationäres Basisteil, Verlängerung
- 12: Drehachse, Achse
- 13: Fingereinkerbungen
- 14a: Betätigungselement
- 14b: Betätigungselement
- 14c: Betätigungselement
- 15a: Bedienschalter
- 15b: Bedienschalter
- 16: Kontrollleuchten
- 17: angedeuteter Finger, nach unten ragenden Fingern, Finger
- 18: vertikale Achse
- 19: Hupbetätigungselement
- 20: federnde Lagerung, zentral angeordnetes Drehteil, Bauteil
- 21: Drehbewegung
- 24: Lagerelement
- 25: Teil der Kopfteilhaube
- 26: Gegenstück
- 27: schienenartigen Elementen
- 28: komplementiert ausgebildete Gegenstücke
- 29a: Betätigungselement
- 29b: Betätigungselement
- 30: konusartiges Bauteil
- 31: Schraubenfeder, Feder
- 32: Achse
- 33: Verlängerung
- 34: Verlängerung
- 35: Drehteil
- 36: drehende Bauteile
- 37: Zwischenstück
- E -·-·- E: Schnitt
- β: Winkel
- γ: Winkel

## Patentansprüche

1. Lenkvorrichtung (5) für Fahrzeuge, insbesondere Gabelstapler, zur Durchführung einer Lenkbewegung des fahrbaren Fahrzeuges auf einem Untergrund durch eine Handbedienung eines Fahrzeugführers,
wobei die Lenkvorrichtung (5) an einer Armlehne (4) eines Fahrzeugsitzes (1) angebracht ist, wobei die Lenkvorrichtung (5) mindestens ein drehbares Radelement (9) umfasst, welches umfangseitig von Fingern einer auf der Lenkvorrichtung (5) abgelegten Hand des Fahrzeugführers zumindest teilweise umfassbar ist und für eine Lenkbewegung um eine Drehachse (12) gedreht werden kann, wobei ein armartiger Ausleger (6) mit einem vorderen Bereich (6a) und einem hinteren Bereich vorgesehen ist,
**dadurch gekennzeichnet, dass**
der hintere Bereich unterhalb der Armlehne (4) befestigt ist, und wobei oberhalb des Radelementes (9) ein gegenüber der Armlehne (4) und gegenüber der Lenkvorrichtung (5) stationär angeordnetes knaufartiges Kopfteil (10) zur Ablage einer Innenhandfläche der Hand und unterhalb des Radelements (9) ein Basiselement (11) angeordnet sind, wobei das Radelement (9), das Basiselement (11) und das Kopfteil (10) oberhalb eines vorderen Anteils des armartigen Auslegers (6) fest angeordnet sind.

2. Lenkvorrichtung (5) nach Anspruch 1,
**dadurch gekennzeichnet, dass**
die Drehachse (12) vertikal ausgerichtet ist.

3. Lenkvorrichtung nach Anspruch 1 oder 2,
**dadurch gekennzeichnet, dass**
das Kopfteil (10) zumindest in Teilen höhenverstellbar ist, um die nach unten ragenden Finger derart zum Radelement (9) zu beabstanden, dass Endbereiche der Finger (17) das Radelement (9) umfassen.

4. Lenkvorrichtung (5) nach einem der Ansprüche 1-3,
**dadurch gekennzeichnet, dass**
das Basisteil (11) stationär gegenüber der Armlehne (4) mit zumindest teilweise integrierten ersten Funktionstasten und -anzeigen (15a, 15b; 16) angeordnet ist.

5. Lenkvorrichtung (5) nach einem der Ansprüche 1-4,
**dadurch gekennzeichnet, dass**
am Kopfteil (10) zweite Funktionstasten und -anzeigen (14a, 14b; 19) angeordnet sind, wobei erste und zweite Funktionstasten und -anzeigen weitere Fahrzeugfunktionenausgewählt aus Lichtfunktionen, Blinkfunktionen, Parkfunktion, Hupfunktion sind.

6. Lenkvorrichtung (5) nach einem der vorangegangenen Ansprüche,
**dadurch gekennzeichnet, dass**
das Radelement (9) umfangseitig Fingerrillen (13) aufweist.

7. Lenkvorrichtung nach einem der vorangegangenen Ansprüche,
**dadurch gekennzeichnet, dass**
das Radelement (9) eine Drehbewegung um einen Drehwinkel von bis zu 180°, vorzugsweise bis 40° nach links oder rechts durchführen kann.

8. Lenkvorrichtung (5) nach Anspruch 7,
**dadurch gekennzeichnet, dass**
die Drehbewegung mit einer Rückstellkraft und/oder Dämpfungskraft beaufschlagbar ist.

9. Lenkvorrichtung (5) nach Anspruch 7 oder 8,
**dadurch gekennzeichnet, dass**
die zulässige Drehbewegung der momentanen Fahrgeschwindigkeit des Fahrzeuges anpassbar ist.

10. Lenkvorrichtung (5) nach einem der Ansprüche 1-9,
**dadurch gekennzeichnet, dass**
das Kopfteil (10); das Basisteil (11) und das Radelement (9) zumindest teilweise kreisförmig ausgebildet sind.

11. Lenkvorrichtung (5) nach einem der vorangegangenen Ansprüche,
**dadurch gekennzeichnet, dass**
die Lenkvorrichtung (5) in Fahrzeugsitzrichtung betrachtet vor der Armlehne (4) angeordnet ist und gegenüber einer Längsachse (4a) der Armlehne (4) bezüglich einer Sitzfläche (3) des Fahrzeugsitzes (1) um einen Winkel (β) nach außen geschwenkt ist.

12. Lenkvorrichtung (5) nach einem der Ansprüche 1-11;
**dadurch gekennzeichnet, dass**
das Kopf- und Basisteil (10, 11) rückseitig zur Armlehne (4) hin zur besseren Auflage der Handfläche verlängert (33, 34) ausgebildet ist.

## Claims

1. Steering device (5) for vehicles, in particular forklift trucks, for performing a steering movement of the mobile vehicle on a surface by manual operation of a vehicle driver,
wherein the steering device (5) is mounted on an armrest (4) of a vehicle seat (1), wherein the steering device (5) comprises at least one rotatable wheel element (9) which can be at least partially embraced on the circumference by fingers of a hand of the vehicle driver placed on the steering device (5) and can be rotated about an axis of rotation (12) for a steering movement, wherein an arm-like cantilever (6) with a front region (6a) and a rear region is provided,
**characterised in that**
the rear region is fastened below the armrest (4), and wherein above the wheel element (9) a knob-like head part (10), which is arranged stationary relative to the armrest (4) and relative to the steering device (5), is arranged for supporting a palm of the hand, and below the wheel element (9) a base element (11) is arranged, wherein the wheel element (9), the base element (11) and the head part (10) are fixedly arranged above a front portion of the arm-like cantilever (6).

2. Steering device (5) according to claim 1,
**characterised in that**
the axis of rotation (12) is aligned vertically.

3. Steering device according to claim 1 or 2,
**characterised in that**
the head part (10) is height-adjustable, at least in parts, in order to distance the downwardly projecting fingers from the wheel element (9) in such a way that end regions of the fingers (17) embrace the wheel element (9).

4. Steering device (5) according to any one of claims 1-3,
**characterised in that**
the base part (11) is arranged stationary opposite the armrest (4) with at least partially integrated first function buttons and displays (15a, 15b; 16).

5. Steering device (5) according to any one of claims 1-4,
**characterised in that**
second function buttons and displays (14a, 14b; 19) are arranged on the head section (10), wherein first and second function buttons and displays are further vehicle functions selected from light functions, indication functions, parking function, horn function.

6. Steering device (5) according to one of the preceding claims,
**characterised in that**
the wheel element (9) has finger grooves (13) on the circumference.

7. Steering device according to one of the preceding claims,
**characterised in that**
the wheel element (9) can perform a rotary movement through an angle of rotation of up to 180°, preferably up to 40° to the left or right.

8. Steering device (5) according to claim 7,
**characterised in that**
the rotary movement can be subjected to a restoring force and/or damping force.

9. Steering device (5) according to claim 7 or 8,
**characterised in that**
the permissible turning movement can be adapted to the current travelling speed of the vehicle.

10. Steering device (5) according to any one of claims 1-9,
**characterised in that**
the head part (10); the base part (11) and the wheel element (9) are at least partially circular.

11. Steering device (5) according to one of the preceding claims,
**characterised in that**
the steering device (5) is arranged in front of the armrest (4) as viewed in the direction of the vehicle seat and is swivelled outwards by an angle (β) relative to a longitudinal axis (4a) of the armrest (4) with respect to a seat surface (3) of the vehicle seat (1).

12. Steering device (5) according to any one of claims 1-11,
**characterised in that**
the head and base part (10, 11) is extended (33, 34) at the rear towards the armrest (4) to provide better support for the palm of the hand.

## Revendications

1. Dispositif de direction (5) pour véhicules, en particulier pour chariots élévateurs, pour effectuer un mouvement de direction du véhicule mobile sur une surface par commande manuelle par un conducteur de véhicule,
le dispositif de direction (5) étant monté sur un accoudoir (4) d'un siège de véhicule (1), le dispositif de direction (5) comportant au moins un élément à roue tournante (9), lequel peut être au moins partiellement saisi sur sa périphérie par les doigts d'une main du conducteur du véhicule placée sur le dispositif de direction (5) et peut être tourné autour d'un axe de rotation (12) pour un mouvement de direction, un bras (6) en porte-à-faux étant prévu avec une zone avant (6a) et une zone arrière,
**caractérisé par le fait que**
la zone arrière est fixée au-dessous de l'accoudoir (4), et où, au-dessus de l'élément à roue (9) est disposée une partie tête (10) en forme de bouton, disposée de manière stationnaire par rapport à l'accoudoir (4) et par rapport au dispositif de direction (5), pour placer la paume de la main, et au-dessous de l'élément à roue (9) est disposé un élément de base (11), l'élément à roue (9), l'élément de base (11) et la partie tête (10) étant disposés de manière fixe au-dessus d'une partie avant du bras en porte-à-faux (6).

2. Dispositif de direction (5) selon la revendication 1,
**caractérisé par le fait que**
l'axe de rotation (12) est orienté verticalement.

3. Dispositif de direction selon l'une des revendications 1 ou 2,
**caractérisé par le fait que**
la partie tête (10) est réglable en hauteur au moins en partie, afin d'espacer les doigts qui dépassent vers le bas par rapport à l'élément à roue (9) de telle sorte que les zones d'extrémité des doigts (17) saisissent l'élément à roue (9).

4. Dispositif de direction (5) selon l'une des revendications 1 à 3,
**caractérisé par le fait que**
la partie de base (11) est disposée de manière stationnaire par rapport à l'accoudoir (4) avec des premières touches de fonction et premiers indicateurs de fonction (15a, 15b; 16) au moins partiellement intégré(e)s.

5. Dispositif de direction (5) selon l'une des revendications 1 à 4,
**caractérisé par le fait que**
des secondes touches et seconds indicateurs de fonction (14a, 14b; 19) sont disposé(e)s sur la partie tête (10), les premières et secondes touches de fonction et les premiers et seconds indicateurs de fonction étant d'autres fonctions du véhicule choisies parmi les fonctions d'éclairage, les fonctions de clignotement, la fonction de stationnement, la fonction de klaxon.

6. Dispositif de direction (5) selon l'une des revendications précédentes,
**caractérisé par le fait que**
l'élément à roue (9) présente sur la périphérie des rainures (13) pour les doigts.

7. Dispositif de direction selon l'une des revendications précédentes,
**caractérisé par le fait que**
l'élément à roue (9) peut effectuer un mouvement de rotation d'un angle de rotation allant jusqu'à 180°, de préférence jusqu'à 40°, vers la gauche ou vers la droite.

8. Dispositif de direction (5) selon la revendication 7,
**caractérisé par le fait que**
le mouvement de rotation peut être soumis à une force de rappel et/ou à une force d'amortissement.

9. Dispositif de direction (5) selon l'une des revendications 7 ou 8,
**caractérisé par le fait que**
le mouvement de rotation admissible est adaptable à la vitesse de déplacement momentanée du véhicule.

10. Dispositif de direction (5) selon l'une des revendications 1 à 9,
**caractérisé par le fait que**
la partie tête (10), l'élément de base (11) et l'élément à roue (9) sont réalisés au moins partiellement de forme circulaire.

11. Dispositif de direction (5) selon l'une des revendications précédentes,
**caractérisé par le fait que**
le dispositif de direction (5) est disposé devant l'accoudoir (4), vu dans la direction du siège du véhicule, et est pivoté vers l'extérieur d'un angle (β) par rapport à un axe longitudinal (4a) de l'accoudoir (4) par rapport à une surface d'assise (3) du siège du véhicule (1).

12. Dispositif de direction (5) selon l'une des revendications 1 à 11,
**caractérisé par le fait que**
la partie tête et de base (10, 11) est agencée pour être prolongée (33, 34) à l'arrière vers l'accoudoir (4) pour un meilleur appui de la paume de la main.
